# EUROPÄISCHE PATENTANMELDUNG

(11) **EP 1 039 207 A2**
(43) Veröffentlichungstag der Anmeldung: **27.09.2000**
(21) Anmeldenummer: 00106393.2
(22) Anmeldetag: 24.03.2000
(51) Int. Cl.: F16L 47/02

(54) **Verfahren zur Herstellung einer Rohrverbindung sowie Rohrleitung**

(30) Priorität: 26.03.1999 DE 19913836
(71) Anmelder: GERODUR MPM, Kunststoffverarbeitung GmbH & Co. KG, 01844 Neustadt in Sachsen (DE)
(72) Erfinder: Henke, Jochen, Dipl.-Ing., 02681 Crostau (DE); Tobias, Wolfgang, Dipl.-Ing., 06112 Halle (DE); Latzusch, Otto, Dipl.-Chem., 06179 Angersdorf (DE); Heiduk, Ines, Dipl.-Ing., 01796 Struppen (DE)
(74) Vertreter: Patentanwälte Lippert, Stachow, Schmidt & Partner

(57) **Zusammenfassung**

Die Erfindung betrifft ein Verfahren zur Herstellung einer Rohrverbindung von Rohren aus vernetzten Thermoplasten, wobei die Rohre stoffschlüssig miteinander verbunden werden, sowie eine entsprechende Rohrleitung. Es soll ein Verbindungsverfahren für derartige Rohrverbindungen vorgeschlagen werden, welches eine sehr hohe Festigkeit des Fügebereichs gewährleistet und das zuverlässig und wirtschaftlich ausführbar ist. Hierzu wird erfindungsgemäß die Rohrverbindung als Muffenverbindung mit einer Muffe (2) aus einem vernetzten Thermoplasten ausgeführt ist, wobei das zu fügende Rohrende (10) zumindest an der äußeren Umfangsfläche und die Muffe (2) zumindest an der inneren Umfangsfläche vorzugsweise über einen Zeitraum von 10-15 Sekunden auf 420-440°C erwärmt werden, um eine thermisch aufgeschlossene Schicht zu erzeugen. Anschließend werden das Rohrenden (10) in die Muffe unter flächiger Verbindung der thermisch aufgeschlossenen Schichten eingeschoben werden und daß anschließend Rohr (1) und die Muffe (2) zum Abkühlen gebracht werden. Die Erwärmung von Muffe und Rohrende kann mittles eines Heizwerkzeuges (4) erfolgen, das einen Heizkern (6) zur Aufnahme der Muffe (2) und eine Heizmuffe (7) zur Aufnahme des Rohrendes (10) aufweist.

## Beschreibung

Die Erfindung betrifft ein Verfahren zur Herstellung einer Rohrverbindung von Rohren aus vernetzten Thermoplasten, wobei die Rohre stoffschlüssig miteinander verbunden werden, sowie nach dem Verfahren hergestellte Rohrleitungen.

Rohre aus vernetzten Thermoplasten sind insbesondere als PE-X-Rohre ausgeführt, die sich gegenüber Rohren aus anderen Materialien, insbesondere auch gegenüber PE-HD-Rohren, durch ihre hervorragenden mechanischen und chemischen Eigenschaften auszeichnen, insbesondere hinsichtlich ihrer Festigkeit, Alterungsstabilität, Temperaturbeständigkeit, Resistenz gegen aggressive Medien, Kerbschlagzähigkeit sowie Beständigkeit gegen Spannungsrißkorrosion und die des weiteren ein sehr langsames Rißwachstum zeigen. Aufgrund ihrer besonderen Eigenschaften sind PE-X-Rohre für viele Anwendungszwecke solchen aus PE-HD deutlich überlegen.

Zur Verbindung von PE-X-Rohren wurden bereits mechanische Quetsch- oder Schiebehülsenfittings aus Messing oder Elektroschweißmuffen eingesetzt. Abgesehen davon, daß diese Verbindungen material- und kostenaufwendig sind, werden im Verbindungsbereich der Rohre sehr unterschiedliche Materialien eingesetzt, wodurch sich Inhomogenitäten im Leitungsaufbau ergeben. Hierdurch kann es zu Bindungsfehlern sowie bei sich ändernden Einsatztemperaturen oder Kontakt mit aggressiven Medien zu einer Reihe anderen Problemen kommen.

Die Verbindung von PE-X-Rohren mittels üblicher Schweißverfahren ist aufgrund der besonderen Materialeigenschaften, die auf den hohen Vernetzungsgrad zurückzuführen sind, praktisch nicht möglich und führt zu unzureichenden Schweißnahtfestigkeiten.

Es wurden daher zum Verschweißen von vernetzten Thermoplasten wie PE-X besondere Schweißverfahren entwickelt, bei denen die Rohre über eine Stumpfschweißverbindung gefügt werden. Hierzu werden die Stirnseiten der Rohre über einen Zeitraum von ca. 60 Sekunden auf sehr hohe Temperaturen erwärmt, wobei das vernetzte Polyäthylen sich unter Aufbrechung der Vernetzungsstellen teilweise zersetzt und eine Schmelzzone ausgebildet wird. Durch Zusammenpressen der Rohre unter einem vorgegebenen minimalen Fügedruck werden diese stirnseitig miteinander verbunden, wobei der Fügedruck bis zum Erkalten des Fügebereiches aufzubringen ist. Bei diesem Verfahren sind die Heizelementtemperatur zur Erwärmung der Fügeflächen, die Erwärmungszeit sowie der Fügedruck sehr genau einzuhalten, so daß dieses Verfahren auf andere Fügetechniken nicht ohne weiteres anwendbar ist. So kann bei gewissen Fügemethoden auf die Verbindungszone der Rohre durch geeignete Preßeinrichtungen nicht der minimale Fügedruck aufgebracht werden, der zur Herstellung der Schweißverbindung zwingend erforderlich ist.

Nachteilig bei dem oben beschriebenen Schweißverfahren ist des weiteren, daß durch den Stumpfstoß die Verbindungsfläche der Rohre vergleichsweise gering ist, wodurch die Festigkeit der Schweißverbindung begrenzt wird und diese anfällig für Fügefehler ist.

Der Erfindung liegt daher die Aufgabe zugrunde, ein Verbindungsverfahren für Rohre aus vernetzten Thermoplasten vorzuschlagen, welches bei einer stoffschlüssigen Verbindung eine sehr hohe Festigkeit des Fügebereichs gewährleistet und das zuverlässig und wirtschaftlich ausführbar ist.

Die Aufgabe wird dadurch gelöst, daß die Rohrverbindung als Muffenverbindung mit einer Muffe aus einem vernetzten Thermoplasten ausgeführt ist, wobei die Rohrverbindung dadurch hergestellt wird, daß das jeweilige Rohrende zumindest an der äußeren Umfangsfläche und die Muffe zumindest an der inneren Umfangsfläche über eine ausreichende Zeit bei einer ausreichenden Temperatur erwärmt werden, um eine thermisch aufgeschlossene Schicht zu erzeugen, daß das Rohrende in die Muffe unter flächiger Verbindung der thermisch aufgeschlossenen Schichten eingeschoben wird und daß anschließend die thermisch aufgeschlossenen Schichten zur Erstarrung gebracht werden.

Ein vernetztes Polyethylen hat sich für den Einsatz als vernetztes Thermoplast geeignet erwiesen.

Durch die Auswahl einer Muffe aus einem vernetzten Thermoplasten wird gewährleistet, daß an der Verbindungsstelle keine Materialinhomogenitäten entstehen. Des weiteren kann durch die großflächige Verbindung zwischen Rohrende und Muffe eine sehr große Verbindungsfläche geschaffen werden, so daß die Zuverlässigkeit und Beanspruchbarkeit der Rohrverbindung deutlich größer als bei einer stirnseitigen Verbindung der Rohrenden ist. Die Festigkeit der Rohrverbindung liegt dabei im Bereich der Eigenfestigkeit des Rohrwerkstoffs.

Es konnte festgestellt werden, daß eine derartige Muffenverbindung bei vernetzten Thermoplasten zuverlässig herstellbar ist, obwohl aufgrund der Verbindung der Rohrenden mittels einer Muffe auf die aufgeschmolzenen Verbindungsbereiche der Bauteile nicht ein äußerer Fügedruck aufgebracht werden kann. Die Aufbringung eines gewissen äußeren Fügedruckes senkrecht zu den Fügeflächen wurde jedoch für die Herstellung von Schweißverbindungen von Bauteilen aus vernetzten Thermoplasten als zwingend erforderlich angesehen. Der Fügedruck entsteht vielmehr durch einen Schmelzedruck/Schmelzeausdehnung.

Des weiteren ist die Möglichkeit der Ausbildung einer großflächigen Verbindung der Rohrenden mit einer Muffe überraschend, da verglichen mit einer lediglich stirnseitigen Verbindung der Rohre sehr große Oberflächen der Rohrenden bzw. der Muffen aufzuschmelzen sind. Aufgrund der hierzu erforderlichen sehr hohen Temperaturen, die eine teilweise Zersetzung des vernetzten Thermoplasten bewirken müssen, ist dementsprechend ein sehr hoher Wärmeeintrag in das jeweilige Kunststoffteil erforderlich. Trotz des sehr hohen Wärmeeintrages in die Kunststoffteile erfolgt somit keine weitergehende Gefügeänderung, die sich nachteilig auf die Verbindungszone bzw. die Wärmeeinbringungszone des Bauteils auswirkt.

Vorteilhafterweise bestehen die Muffe sowie die mit dieser zu verbindenden Rohre aus dem gleichen Grundmaterial und weisen vorzugsweise auch im wesentlichen den gleichen Vernetzungsgrad auf.

Das vernetzte thermoplastische Material kann insbesondere PE-X sein.

Zur Verbindung der Rohre mit der Muffe werden die Verbindungsbereiche auf Temperaturen von > 400 °C erwärmt, um oberflächlich eine Schmelze ausreichender Viskosität zu erhalten. Vorzugsweise wird eine Temperatur von 450°C nicht überschritten, um irreversible Schädigungen oder nicht mehr beherrschbare Verformungen der Bauteile zu verhindern.

Besonders bevorzugt werden die zu verbindenden Bereiche auf eine Temperatur von 420 bis 440 °C erwärmt. Die genaue Einhaltung dieses Temperaturbereichs hat sich als sehr vorteilhaft für eine ausreichend stabile und gleichzeitig maßgenaue Muffenverbindung, bei welcher die zu fügenden Bauteile keinen unerwünschten Materialveränderungen oder Verformungen unterliegen, erwiesen.

Die Erwärmung der Bauteile kann insbesondere durch formschlüssige Kontaktierung der Verbindungsbereiche der Bauteile mit einem Hochtemperaturheizelement erfolgen, dessen Oberfläche auf die entsprechende Temperatur gebracht wird. Das Hochtemperaturheizelement kann insbesondere mit einem Heizdorn, auf den die Verbindungsmuffe aufgeschoben wird, bzw. mit einer Heizmuffe, in welche das zu verbindende Rohrende eingeschoben wird, versehen sein, wobei die Oberflächentemperatur des Heizelementes entsprechend einstellbar ist.

Als Erwärmungszeit für die Verbindungsbereiche der Bauteile, d.h. den Zeitraum des ersten Kontaktes der zu erwärmenden Verbindungsbereiche der Bauteile mit dem Hochtemperaturheizelement bis zur Trennung der Bauteile von dem Heizelement, hat sich ein Zeitraum von größer 10 Sekunden, vorzugsweise 12 bis 15 Sekunden, als vorteilhaft herausgestellt. Die genaue Einhaltung der Erwärmungszeit ist für die Erzeugung einer zufriedenstellenden Schweißverbindung ebenso von wesentlicher Bedeutung wie die Einhaltung der Erwärmungstemperatur. Die Erwärmungszeit kann bei bei niedrigen Vernetzungsgraden, z.B. kleiner als 50%, oder Rohren kleiner Durchmesser, z.B. kleiner als 40 mm, ggf. auch kürzer als 10 Sekunden sein. Werden somit Bauteile unterschiedlichen Vernetzungsgrades miteinander gefügt, so werden vorteilhafterweise die Erwärmungstemperaturen so gewählt, daß Schmelzen im wesentlichen gleicher Viskosität entstehen. Erwärmungszeiten von länger als 20 Sekunden haben sich als nicht vorteilhaft herausgestellt.

Der Erfolg des Verfahrens hängt dabei auch von einer genauen Abstimmung von Erwärmungstemperatur und Erwärmungszeit aufeinander ab. So hat es sich als vorteilhaft erwiesen, die Verbindungsbereiche der Bauteile derart aufzuschmelzen, daß eine nur sehr dünne Schmelzzone im Bereich von 1/10-Millimeter, vorzugsweise kleiner 5/10 Millimeter, insbesondere ca. 2/10 bis 5/100 Millimeter, entsteht, die jedoch vergleichsweise dünnflüssig ist, so daß eine enge Verbindung bis Vermischung der Schmelzen der beiden Verbindungsbereiche möglich ist.

Nach Entfernen der zu fügenden Bauteile von dem Heizelement werden diese in einer möglichst kurzen Zeit, nach Möglichkeit innerhalb von weniger als 6 Sekunden, vorzugsweise kürzer als 3 Sekunden, miteinander gefügt, wozu das Rohr bis zur Erreichung der Sollstellung in die Muffe eingeschoben und ohne weitere Einwirkung von außen in dieser abgekühlt wird.

Um das Einführung des Rohres in die Muffe zu erleichtern ist das Rohrende vorteilhafterweise am Außenumfang angefast.

Zur exakten Definierung der Endstellung des Rohres in der Muffe ist vorteilhafterweise die Muffe mit einem innenliegenden Anschlag, z.B. einem umlaufenden, radial nach innen vorstehenden Absatz oder Ring versehen. Zur Herstellung der Muffenverbindung wird dabei vorzugsweise lediglich die Innenfläche der Muffe aufgeschmolzen, nicht jedoch die Stirnseite des Anschlags. Unter bestimmten Bedingungen kann es jedoch auch vorteilhaft sein, die axiale Stirnfläche des Anschlages sowie die Stirnfläche des Rohrendes entsprechend zu erwärmen.

Die zu verbindenden Bauteile der Muffenverbindung weisen vorzugsweise einen Vernetzungsgrad von 60 bis 70 % auf, wobei die zu verbindenden Bauteile vorzugsweise jeweils den gleichen Vernetzungsgrad aufweisen.

Das erfindungsgemäße Verfahren zeichnet sich insbesondere dadurch aus, daß eine großflächige Verbindung der Rohre mit der Muffe hergestellt werden kann, ohne daß die Verbindungsflächen zur Verbindung mit irgendwie gearteten Beschichtungen, Haftvermittlern oder anderen artfremden Materialien zu versehen sind.

Des weiteren ist das erfindungsgemäße Verfahren unabhängig davon anwendbar, wie das thermoplastische Material vernetzt wurde, also z.B. durch chemische Vernetzung oder durch Bestrahlung mit Gammastrahlen.

Die erfindungsgemäß hergestellten Rohrleitungen zeichnen sich durch eine sehr stabile und hochbeanspruchbare Rohrverbindung aus, die insbesondere für Rohrdurchmesser von < 125 mm geeignet ist und mittels derer z.B. Gas- und Wasserrohrleitungen sowie Kabelrohre bzw. Reliningrohr herstellbar sind.

Die Erfindung wird nachfolgend beispielhaft erläutert und anhand der Figuren beispielhaft beschrieben. Es zeigen:
- Figur 1: die Anordnung eines Hochtemperaturheizelementes mit Rohr und Muffe,
- Figur 2: das Hochtemperaturheizelement nach Figur 1 beim Erwärmen der Verbindungsflächen von Muffe und Rohr,
- Figur 3: ein Rohr mit eingefügter Muffe.

Zur Herstellung einer Verbindung eines Rohrs 1 aus PE-X mit einem Vernetzungsgrad von 65 % mit einem weiteren nicht dargestellten Rohr aus dem gleichen Material wird eine Muffe 2 bereitgestellt, die ebenfalls aus PE-X mit einem Vernetzungsgrad von 65 % besteht. An der zylindrischen Innenfläche der Muffe 2 ist mittig ein radial umlaufender Steg 3 angeordnet, der die Einschubtiefe des Rohres 1 in die Muffe 2 begrenzt.

Der Innendurchmesser der Muffe ist maßgenau an den Außendurchmesser des Rohrendes angepaßt, so daß nach der beschriebenen Erwärmung der Verbindungsflächen das Rohrende spielfrei in die Muffe einführbar ist. Der äußere Rohrdurchmesser ist dabei so bemessen, daß dieser unter den Fügebedingungen ein äußerst geringes Übermaß gegen den Muffeninnendurchmesser im Bereich von einigen Hundertstel Millimetern aufweist. Hierdurch werden beim Einschieben des Rohrendes in die Muffe, wozu eine ausreichende Schubkraft in Längsrichtung des Rohres erforderlich ist, die plastifizierten Verbindungsbereiche vollflächig aneinander anliegend unter Schereinwirkung deformiert und dadurch in einen fließenden Zustand gebracht und miteinander innig verbunden. Das Übermaß des Rohrendes soll demnach die Gesamtdicke der plastifizierten Zonen der zu verbindenden Bauteile nicht überschreiten. Die Länge des Fügeweges, d.h. des Weges über den die Verbindungsbereiche aneinander anliegend unter Schereinwirkung auf die Schmelzen verschoben werden, sowie die Passung zwischen Rohr und Muffe bestimmen wesentlich die Festigkeit der Fügeverbindung mit.

Zur Herstellung der Muffenverbindung wird ein Temperaturheizwerkzeug 4 eingesetzt, welches aus einem Hochtemperaturheizelement 5 besteht, an dessen beiden ebenen Seitenflächen zentrisch zueinander angeordnet ein Heizdorn 6 sowie eine Heizmuffe 7 befestigt sind. Der Heizdorn 6 sowie die Heizmuffe 7 bestehen aus einem zunderfreien Stahl und werden durch Wärmeleitung über das Heizelement 5 beheizt. Es ist jedoch auch eine andere geeignete Beheizung des Heizdorns sowie der Heizmuffe bzw. der Verbindungsflächen der Bauteile möglich.

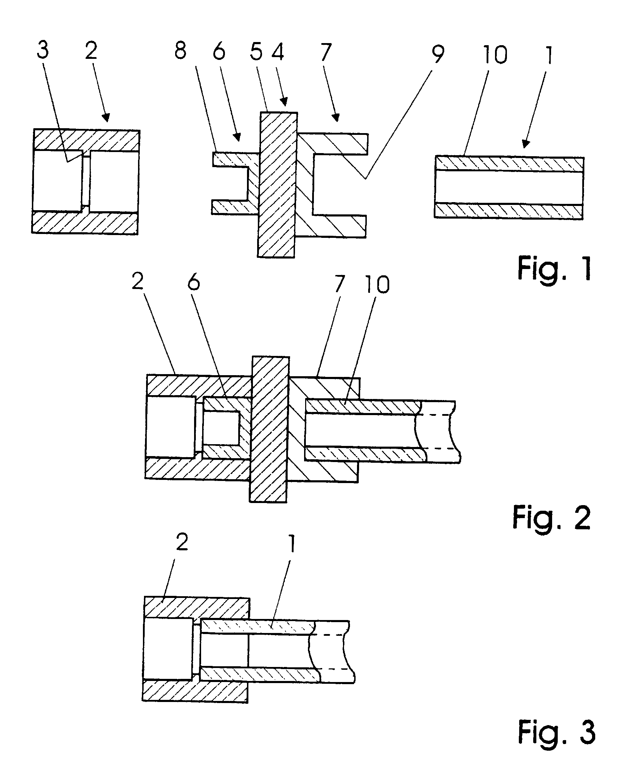

Wie aus Figur 2 hervorgeht, werden das Rohrende sowie die Muffe jeweils bis zum Anschlag auf den Heizdorn auf bzw. in die Heizmuffe eingeschoben. Die zylindrische Außenfläche 8 des Heizdornes 6 sowie die zylindrische Innenfläche 9 der Heizmuffe 7 werden durch das Heizelement 5 auf Oberflächentemperaturen von 430 °C erwärmt. Nach Erreichen der Soll-Temperatur werden jeweils bis zum Anschlag die Muffe 2 auf den Heizdorn 6 aufgeschoben und das Rohrende 10 des Rohres 1 in die Heizmuffe 7 eingeführt. Die Außen- bzw. Innendurchmesser von Heizdorn und Heizmuffe sind derart auf die zu verbindenden Bauteile abgestimmt, daß nach Beendigung der Erwärmungszeit die Heizflächen vollflächig aber mit nur geringem Anpreßdruck an den Erwärmungszonen der Bauteile anliegen und damit die Bauteile ohne oder mit nur geringer Deformation der Aufschmelzbereiche von dem jeweiligen Heizwerkzeug entfernt werden können.

Nach einer Erwärmungszeit von 12 Sekunden werden, wie durch Figur 3 angedeutet, die Muffe sowie das Rohr von dem jeweiligen Heizwerkzeug abgezogen und innerhalb von drei Sekunden das Rohr 1 unter Ausübung einer ausreichenden Schubkraft zentrisch in die Muffe 2 bis zum Anschlag an den Steg 3 eingeführt. In dieser Position erfolgt das Abkühlen der Bauteile ohne Lageveränderung zueinander durch ruhende Luft.

Die Einschubtiefe des Rohres 1 in die Muffe 2 hängt dabei von den jeweiligen Dimensionen der Bauteile ab und ergibt sich aus allgemeinen Festigkeitsüberlegungen.

Entsprechend dem oben Gesagten kann ein weiteres Rohr stoffschlüssig auf der anderen Seite in der Muffe festgelegt werden, wodurch sich eine dauerhafte und hochbelastbare Rohrverbindung ergibt.

### Bezugszeichenliste

- 1: Rohr
- 2: Muffe
- 3: Steg
- 4: Heizwerkzeug
- 5: Heizelement
- 6: Heizdorn
- 7: Heizmuffe
- 8: Außenfläche
- 9: Innenfläche
- 10: Rohrende

## Patentansprüche

1. Verfahren zur Herstellung einer Rohrverbindung von Rohren aus vernetzten Thermoplasten, wobei die Rohre stoffschlüssig miteinander verbunden werden, **dadurch gekennzeichnet**, daß die Rohrverbindung als Muffenverbindung mit einer Muffe (2) aus einem vernetzten Thermoplasten ausgeführt ist, daß das zu fügende Rohrende (10) zumindest an der äußeren Umfangsfläche und die Muffe (2) zumindest an der inneren Umfangsfläche über eine ausreichende Zeit bei einer ausreichenden Temperatur erwärmt werden, um eine thermisch aufgeschlossene Schicht zu erzeugen, daß die Rohrenden (10) in die Muffe unter flächiger Verbindung der Schmelzschichten eingeschoben werden und daß anschließend Rohr (1) und die Muffe (2) zum Abkühlen gebracht werden.

2. Verfahren nach Anspruch 1, **dadurch gekennzeichnet**, daß die zu fügenden Bauteile (1, 2) aus dem gleichen Basiswerkstoff bestehen.

3. Verfahren nach Anspruch 1 oder 2, **dadurch gekennzeichnet**, daß der vernetzte Thermoplast PE-X ist.

4. Verfahren nach einem der Ansprüche 1 bis 3, **dadurch gekennzeichnet**, daß die Fügeflächen von Rohr (1) und Muffe (2) auf Temperaturen oberhalb 400 °C, vorzugsweise 420 bis 440 °C, erwärmt werden.

5. Verfahren nach einem der Ansprüche 1 bis 4, **dadurch gekennzeichnet**, daß die Erwärmungszeit der Fügeflächen von Rohr (1) und Muffe (2) mindestens 10 Sekunden, dimensionsabhängig vorzugsweise 10 bis 25 Sekunden, beträgt.

6. Verfahren nach einem der Ansprüche 1 bis 5, **dadurch gekennzeichnet**, daß der Vernetzungsgrad des Rohres (1) sowie der Muffe (2) mindestens 60 % beträgt.

7. Verfahren nach einem der Ansprüche 1 bis 6, **dadurch gekennzeichnet**, daß die Muffe (2) an ihrer innenliegenden Umfangsfläche, vorzugsweise in der Muffenmitte, einen Anschlag (3) zur Anlage eines Rohrendes (10) des zu verbindenden Rohres (1) aufweist.

8. Rohrleitung mit Rohren, die über Muffenverbindungen miteinander verbunden sind, **dadurch gekennzeichnet**, daß das Rohr (1) und die Muffe (2) aus einem vernetzten Thermoplasten bestehen.

9. Rohrleitung nach Anspruch 9, **dadurch gekennzeichnet**, daß der Thermoplast PE-X ist.

10. Rohrleitung mit durch Muffenverbindungen miteinander verbundenen Rohren, **dadurch gekennzeichnet**, daß die Rohrverbindung nach einem Verfahren nach den Ansprüchen 1 bis 8 hergestellt ist.
